# EUROPÄISCHE PATENTANMELDUNG

(11) **EP 4 474 147 A2**
(43) Veröffentlichungstag der Anmeldung: **11.12.2024**
(21) Anmeldenummer: 24209373.0
(22) Anmeldetag: 09.03.2020
(51) Int. Cl.: B32B 17/10

(54) **FAHRZEUG-VERBUNDSCHEIBE MIT EINEM HEIZBAREN EINLEGEELEMENT**

(30) Priorität: 19.03.2019 EP 19163659
(62) Teilanmeldung aus: 20709580.3
(71) Anmelder: SAINT-GOBAIN GLASS FRANCE, 92400 Courbevoie (FR)
(72) Erfinder: WOHLFEIL, Dirk, 52134 Herzogenrath (DE); VARGA, Gabor, 52134 Herzogenrath (DE); MATHEISEN, Christopher, 52134 Herzogenrath (DE); KOLF, Michael, 52134 Herzogenrath (DE)
(74) Vertreter: Gebauer, Dieter Edmund

(57) **Zusammenfassung**

Die vorliegende Erfindung betrifft eine Fahrzeug-Verbundscheibe (1) mindestens umfassend
- eine erste Scheibe (2) und eine zweite Scheibe (3), die über mindestens eine thermoplastische Zwischenschicht (4) miteinander verbunden sind, und
- ein Einlegeelement (5), mindestens umfassend eine transparente Substratschicht (7) und eine elektrisch beheizbare opake Schicht (11), die mindestens eine Aussparung (8) aufweist, wobei

i) die transparente Substratschicht (7) vollflächig direkt benachbart zur elektrisch beheizbaren opaken Schicht (11) und der mindestens einen Aussparung (8) angeordnet ist, oder
ii) die transparente Substratschicht (7) vollständig in der mindestens einen Aussparung (8) der elektrisch beheizbaren opaken Schicht (11) angeordnet ist,
wobei das Einlegeelement (5) zwischen der ersten Scheibe (2) und der zweiten Scheibe (3) angeordnet ist.

## Beschreibung

Die Erfindung betrifft eine Fahrzeug-Verbundscheibe mit einem heizbaren Einlegeelement, ein Verfahren zu ihrer Herstellung und ihre Verwendung.

Moderne Fahrzeuge werden mit einer steigenden Anzahl an optischen Sensoren ausgestattet, deren Signale zur Unterstützung des Fahrers verwendet werden. Beispiele solcher Sensoren sind Kameras wie Videokameras oder Nachtsichtkameras, Regensensoren, Lichtsensoren oder Abstandsmesser. Nach vorne gerichtete Sensoren werden häufig an der innenraumseitigen Oberfläche der Windschutzscheibe befestigt, typischerweise mittig in der Nähe der Oberkante. Die Sensoren werden im Stand der Technik durch einen opaken Abdeckdruck auf der Windschutzscheibe verdeckt. Dazu ist der übliche periphere, rahmenartige Abdeckdruck, der in erster Linie als UV-Schutz für den Montagekleber der Windschutzscheibe dient, im Bereich der Sensoren deutlich in Richtung der Scheibenmitte vergrößert.

Herkömmliche Sensoren sind so an der Windschutzscheibe angebracht, dass ihre Detektionsrichtung horizontal verläuft. Da die Windschutzscheibe stark geneigt im Fahrzeug installiert ist, beispielsweise mit einem Einbauwinkel von 60° zur Vertikalen, schließt die Detektionsrichtung des Sensors einen sehr spitzen Winkel von etwa 30° mit der Windschutzscheibe ein. Daraus resultiert ein vergleichsweise großes, im Wesentlichen trapezförmiges, sogenanntes Sensorfenster der Windschutzscheibe. Das Sensorfenster ist derjenige Bereich der Windschutzscheibe, durch den verlaufende Strahlung durch den Sensor detektiert wird. Das Sensorfenster der Windschutzscheibe ist also der Bereich, der im Detektionsstrahlengang des Sensors liegt.

Je mehr Sensoren an der Scheibe befestigt werden sollen, desto mehr Fläche der Windschutzscheibe wird durch die Summe der Sensorfenster eingenommen und desto größer muss der Abdeckdruck ausgebildet werden, der die Sensoren verdecken soll.

Der Abdeckdruck wird bei der Herstellung einer Fahrzeug-Verbundscheibe im Siebdruck vor dem Biegen der einzelnen Scheiben auf die Außenscheibe oder die Innenscheibe aufgebracht. Während des Biegeprozesses, der üblicherweise bei Temperaturen von 500 °C bis 700 °C durchgeführt wird, wird die Hitze von dem Siebdruck stärker absorbiert als von der jeweiligen Scheibe. Dies kann zu optischen Verzerrungen in von Siebdruck, insbesondere Schwarzdruck, umgebenden Sensorfenstern und/oder zu Glasbruch führen.

Die Sensorfenster sollten frei von Eis oder Beschlag gehalten werden. Dies kann beispielsweise durch beheizbare Sensorfenster ermöglicht werden. Dazu werden beispielsweise im Bereich der Sensorfenster Heizdrähte einlaminiert. Solche einlaminierte Heizdrähte sind jedoch unvorteilhaft für die optische Qualität der Sensorfenster.

DE 102 49 992 C1 und EP 2 977 202 A1 offenbaren Verbundscheiben mit einer elektrisch leitfähigen Schicht und einem opaken Randstreifen.

In der DE 10 2012 018 001 A1 ist eine beheizbare Fahrzeug-Verbundscheibe mit einem Sensorfenster und einem opaken Abdeckdruck offenbart.

Eine Scheibe mit einem beheizbaren Sensorfeld ist in der DE 10 2009 026 021 A1 offenbart.

Der vorliegenden Erfindung liegt die Aufgabe zugrunde, eine verbesserte Fahrzeug-Verbundscheibe bereitzustellen, bei der insbesondere die Sensorfenster beheizbar sind und die optische Qualität der Sensorfenster verbessert ist und/oder die Gefahr von Glasbruch während des Biegeprozesses vermindert ist.

Die Aufgabe der vorliegenden Erfindung wird erfindungsgemäß durch eine Fahrzeug-Verbundscheibe gemäß Anspruch 1 gelöst. Bevorzugte Ausführungen gehen aus den Unteransprüchen hervor.

Die erfindungsgemäße Fahrzeug-Verbundscheibe umfasst mindestens eine erste Scheibe und eine zweite Scheibe, die über mindestens eine thermoplastische Zwischenschicht miteinander verbunden sind, und ein Einlegeelement, dass zwischen der ersten Scheibe und der zweiten Scheibe angeordnet ist.

Erfindungsgemäß umfasst das Einlegeelement eine opake Schicht, die mindestens eine Aussparung aufweist, eine transparente Substratschicht und eine transparente elektrisch leitfähige Schicht.

Erfindungsgemäß ist die transparente elektrisch leitfähige Schicht eine elektrisch heizbare Schicht, d.h. eine Schicht, die sich bei Anlegen einer Spannung erwärmt.

Es sind verschiedene Abfolgen und Ausführungsformen der Schichten in dem Einlegeelement möglich. Durch die unterschiedlichen Schichtenabfolgen in dem Einlegeelement ergeben sich verschiedene Ausführungsformen der erfindungsgemäßen Fahrzeug-Verbundscheibe, die ein solches Einlegelement aufweist.

In einer Ausführungsform der erfindungsgemäßen Fahrzeug-Verbundscheibe ist das Einlegeelement derart aufgebaut, dass die transparente Substratschicht zwischen der opaken Schicht und der transparenten elektrisch beheizbaren Schicht angeordnet ist.

In einer weiteren Ausführungsform ist der Schichtaufbau des Einlegeelements derart, dass die transparente elektrisch beheizbare Schicht zwischen der transparenten Substratschicht und der opaken Schicht angeordnet ist.

In einer Ausführungsform ist in dem Einlegeelement die transparente Substratschicht rahmenartig von der opaken Schicht umgeben, d.h. die transparente Substratschicht ist vollständig in der mindestens einen Aussparung der opaken Schicht angeordnet. Die transparente elektrisch beheizbare Schicht ist in dieser Ausführungsform vollflächig direkt benachbart zu der opaken Schicht und zu der transparenten Substratschicht angeordnet. Sie erstreckt sich somit über die gesamte Länge und Breite des Einlegeelements, d.h. sie hat die gleichen äußeren Abmessungen wie die opake Schicht. Weist die opake Schicht mehr als eine Aussparung auf, so ist in dieser Ausführungsform in jeder dieser Aussparungen ein Teilstück der transparenten Substratschicht angeordnet, wobei jedes dieser Teilstücke rahmenartig von der opaken Schicht umgeben ist. Es ist auch möglich, dass die transparente Substratschicht und die opake Schicht einstückig ausgebildet sind. Dies kann beispielsweise durch die bereichsweise opake Einfärbung einer transparenten Substratschicht realisiert sein. Eine separate opake Schicht ist in diesen Ausführungsformen dann nicht notwendig.

Die transparente Substratschicht und die transparente elektrisch beheizbare Schicht können auch einstückig als eine elektrisch beheizbare transparente Substratschicht ausgebildet sein. In einer Ausführungsform ist in dem Einlegeelement die opake Schicht, die mindestens eine Aussparung aufweist, direkt benachbart zu der elektrisch beheizbaren transparenten Substratschicht angeordnet. In einer weiteren Ausführungsform umgibt die opake Schicht die elektrisch beheizbare transparente Substratschicht, d.h. die elektrisch beheizbare transparente Substratschicht ist vollständig in der Aussparung der opaken Schicht angeordnet. Weist die opake Schicht mehr als eine Aussparung auf, so ist in dieser Ausführungsform in jeder dieser Aussparungen ein Teilstück der elektrisch beheizbaren transparenten Substratschicht angeordnet, wobei jedes dieser Teilstücke rahmenartig von der opaken Schicht umgeben ist.

In einer Ausführungsform sind in dem Einlegeelement die opake Schicht und die transparente elektrisch beheizbare Schicht einstückig als eine elektrisch beheizbare opake Schicht, die mindestens eine Aussparung aufweist, ausgebildet und die transparente Substratschicht ist vollflächig direkt benachbart zu der elektrisch beheizbaren opaken Schicht und der mindestens einen Aussparung angeordnet. Sie erstreckt sich somit über die gesamte Länge und Breite des Einlegeelements, d.h. sie hat die gleichen äußeren Abmessungen wie die elektrisch beheizbare opake Schicht.

In einer weiteren Ausführungsform sind in dem Einlegeelement die opake Schicht und die transparente elektrisch beheizbare Schicht einstückig als eine elektrisch beheizbare opake Schicht, die mindestens eine Aussparung aufweist, ausgebildet und die transparente Substratschicht ist vollständig in der mindestens einen Aussparung der elektrisch beheizbaren opaken Schicht angeordnet. D.h. in dieser Ausführungsform ist die transparente Substratschicht rahmenartig von der elektrisch beheizbaren opaken Schicht umgeben. Weist die elektrisch beheizbare opake Schicht mehr als eine Aussparung auf, so ist in dieser Ausführungsform in jeder dieser Aussparungen ein Teilstück der transparenten Substratschicht angeordnet, wobei jedes dieser Teilstücke rahmenartig von der elektrisch beheizbaren opaken Schicht umgeben ist.

Die erste Scheibe und die zweite Scheibe bestehen typischerweise aus Glas. Dabei kann die erste Scheibe die Außenscheibe und die zweite Scheibe die Innenscheibe der erfindungsgemäßen Fahrzeug-Verbundscheibe sein. Alternativ kann auch die zweite Scheibe die Außenscheibe und die erste Scheibe die Innenscheibe der erfindungsgemäßen Fahrzeug-Verbundscheibe sein. Die Fahrzeug-Verbundscheibe ist zur Abtrennung eines Fahrzeuginnenraums von einer äußeren Umgebung vorgesehen. Die Fahrzeug-Verbundscheibe ist also eine Fensterscheibe, die in eine Fensteröffnung der Fahrzeugkarosserie eingesetzt ist oder dafür vorgesehen ist. Die erfindungsgemäße Fahrzeug-Verbundscheibe ist insbesondere eine Windschutzscheibe eines Kraftfahrzeugs.

Mit Innenscheibe wird diejenige Scheibe bezeichnet, welche dafür vorgesehen ist, in Einbaulage dem Innenraum des Fahrzeugs zugewandt zu sein. Mit Außenscheibe wird diejenige Scheibe bezeichnet, welche dafür vorgesehen ist, in Einbaulage der äußeren Umgebung des Fahrzeugs zugewandt zu sein. Wie oben beschrieben kann bei der erfindungsgemäßen Fahrzeug-Verbundscheibe die erste Scheibe die Außenscheibe und die zweite Scheibe die Innenscheibe sein oder alternativ die zweite Scheibe die Außenscheibe und die erste Scheibe die Innenscheibe sein. Diejenige Oberfläche der jeweiligen Scheibe, welche in Einbaulage der äußeren Umgebung des Fahrzeugs zugewandt ist, wird als außenseitige Oberfläche bezeichnet. Diejenige Oberfläche der jeweiligen Scheibe, welche in Einbaulage dem Innenraum des Fahrzeugs zugewandt ist, wird als innenraumseitige Oberfläche bezeichnet.

Der Bereich der Fahrzeug-Verbundscheibe, der im Detektionsstrahlengang eines Sensors angeordnet ist beziehungsweise dafür vorgesehen ist, wird als Sensorbereich oder Sensorfenster bezeichnet. Strahlung, die im Sensorfenster durch die Fahrzeug-Verbundscheibe tritt, wird durch den Sensor detektiert.

Handelt es sich bei dem Sensor um eine Kamera, so kann der Bereich der Fahrzeug-Verbundscheibe, der im Detektionsstrahlengang der Kamera angeordnet ist beziehungsweise dafür vorgesehen ist, auch als Kamerabereich oder Kamerafenster bezeichnet werden. Strahlung, die im Kamerafenster durch die Fahrzeug-Verbundscheibe tritt, wird durch die Kamera detektiert.

In einer bevorzugten Ausführungsform einer erfindungsgemäßen Fahrzeug-Verbundscheibe ist die mindestens eine Aussparung in der opaken Schicht des Einlegeelements ein Sensorfenster für einen optischen Sensor.

Die erfindungsgemäße Fahrzeug-Verbundscheibe ist insbesondere dafür vorgesehen und geeignet, dass ein optischer Sensor an der Scheibe befestigt wird, die in Einbaulage die Innenscheibe darstellt. Dazu kann die innenraumseitige Oberfläche der Innenscheibe mit geeigneten Halterungen ausgestattet sein, beispielsweise mit einem *Bracket* oder Gehäuse.

Die optischen Sensoren sind bevorzugt Kameras wie Videokameras oder Nachtsichtkameras, Regensensoren, Lichtsensoren, Abstandsmesser oder LIDAR (light detection and ranging) Systeme. Beim Vorhandensein von mehr als einem optischen Sensor, kann die Art der einzelnen optischen Sensoren auch unterschiedlich sein.

Die Fahrzeug-Verbundscheibe umfasst in einer Ausführungsform zusätzlich mindestens einen optischen Sensor, der an der innenraumseitigen Oberfläche der Innenscheibe befestigt ist und auf die mindestens eine Aussparung gerichtet ist. Der Sensor ist bevorzugt bei Durchsicht durch die Fahrzeug-Verbundscheibe von außen durch die opake Schicht oder die elektrisch beheizbare opake Schicht verdeckt und somit von außen nicht sichtbar.

Bevorzugt entspricht die Anzahl der Aussparungen in der opaken Schicht oder der elektrisch beheizbaren opaken Schicht der Anzahl der optischen Sensoren, so dass jeweils ein Sensor auf eine Aussparung gerichtet ist. Es ist aber auch möglich, dass die Anzahl der Aussparungen geringer als die Anzahl der Sensoren ist, so dass mehrere Sensoren auf dieselbe Aussparung gerichtet sind.

In einer Ausführungsform ist die mindestens eine Aussparung trapezförmig. Eine trapezförmige Aussparung ist insbesondere als Sensorfenster für eine Kamera geeignet. In einer weiteren Ausführungsform ist die mindestens eine Aussparung kreisförmig oder oval. Eine kreisförmige oder ovale Aussparung ist insbesondere als Sensorfenster für einen Regensensor geeignet. Weist die opake Schicht oder die elektrisch beheizbare opake Schicht mehr als eine Aussparung auf, so können diese auch verschiedene Formen haben.

Die Fläche der mindestens einen Aussparung entspricht mindestens der Größe des für die jeweiligen Sensoren benötigten Sensorfensters, bevorzugt genau der Größe des für die jeweiligen Sensoren benötigten Sensorfensters. Die Aussparung hat bevorzugt eine Fläche von mindestens 1 cm², besonders bevorzugt von 1 cm² bis 500 cm², ganz besonders bevorzugt von 10 cm² bis 250 cm², insbesondere von 20 cm² bis 100 cm², beispielsweise 35 cm². Weist die opake Schicht mehr als eine Aussparung auf, so können die Flächen dieser unterschiedlich sein.

Die erste Scheibe, die zweite Scheibe und die mindestens eine thermoplastische Zwischenschicht weisen üblicherweise dieselben Abmessungen auf.

Bevorzugt ist das Einlegeelement von den Abmessungen her kleiner als die erste Scheibe, die zweite Scheibe und die mindestens eine thermoplastische Zwischenschicht. Beispielsweise bedeckt das Einlegeelement die Scheiben nur teilweise. Die Fläche des Einlegeelements beträgt in einer Ausführungsform maximal 95 %, bevorzugt maximal 75 %, besonders bevorzugt maximal 50 %, ganz besonders bevorzugt maximal 10 % der Fläche der Fahrzeug-Verbundscheibe.

In einer bevorzugten Ausführungsform enthält die opake Schicht des Einlegeelements Polyethylenterephthalat (PET) oder Polyethylen (PE), insbesondere PET. In einer besonders bevorzugten Ausführungsform besteht die opake Schicht des Einlegeelements aus Polyethylenterephthalat (PET) oder Polyethylen (PE), insbesondere aus PET.

Es versteht sich, dass die opake Schicht auch als eine opake Beschichtung der transparenten Substratschicht oder der elektrisch beheizbaren transparenten Substratschicht ausgebildet sein kann. Somit unterscheidet sich die als eine opake Beschichtung ausgebildete opake Schicht von einem auf die erste Scheibe oder die zweite Scheibe aufgebrachten opaken Abdeckdruck. Dem Fachmann sind geeignete opake Beschichtungen und Druckverfahren zur Auftragung der opaken Beschichtung auf die transparente Substratschicht oder die elektrisch beheizbare transparente Substratschicht bekannt.

Die opake Schicht ist bevorzugt zwischen 10 µm (Mikrometer) und 200 µm, besonders bevorzugt zwischen 100 µm und 200 µm, ganz besonders bevorzugt zwischen 125 µm und 180 µm dick. In bevorzugten Ausführungsformen ist die opake Schicht 125 µm oder 150 µm dick.

In einer bevorzugten Ausführungsform enthält die transparente Substratschicht des Einlegeelements ein Thermoplast oder ein Duroplast oder besteht daraus. Alternativ kann die transparente Substratschicht eine Glasschicht mit einer Dicke von kleiner oder gleich 0,5 mm, bevorzugt kleiner gleich 0,2 mm, besonders bevorzugt kleiner gleich 0,1 mm sein.

Bevorzugt enthält die transparente Substratschicht Ethylenvinylacetat (EVA), Polyvinylbutyral (PVB), Polyurethan (PU), Polyethylenterephthalat (PET), Polyethylen (PE) oder Polyester oder Gemische oder Copolymere oder Derivate davon oder besteht daraus. Besonders bevorzugt enthält die transparente Substratschicht Polyethylenterephthalat (PET) oder besteht daraus.

Die transparente Substratschicht ist bevorzugt zwischen 10 µm und 500 µm, besonders bevorzugt zwischen 50 µm und 200 µm, ganz besonders bevorzugt zwischen 80 µm und 125 µm dick. Die transparente Substratschicht ist beispielsweise 50 µm oder 100 µm dick.

Die transparente elektrisch beheizbare Schicht kann eine elektrisch beheizbare Beschichtung, eine Kohlenstoff enthaltende Schicht, oder eine metallische Schicht sein. Alternativ kann die transparente elektrisch beheizbare Schicht ein leitfähiges Polymer enthalten oder daraus bestehen. Dem Fachmann ist bekannt, welche Materialien sich als transparente elektrisch beheizbare Schichten eignen. Beispielsweise kann die transparente elektrisch beheizbare Schicht eine Indium-Zinn-Oxid (ITO) Schicht oder Beschichtung, eine Silber oder silberhaltige Legierung enthaltende Schicht oder Beschichtung, eine Gold, Aluminium oder Wolfram enthaltende Schicht oder Beschichtung, eine Graphite enthaltende Schicht oder Beschichtung oder Graphen sein. Beispiele für leitfähige und somit beheizbare Polymere sind Poly-3,4-ethylendioxythiophen (PEDOT) mit Polystyrolsulfonat (PSS) als Gegenion, dotiertes Polyacetylen (PAC) und Polyanilin (PAni).

Die transparente elektrisch beheizbare Schicht ist bevorzugt zwischen 5 µm und 50 µm, besonders bevorzugt zwischen 5 µm und 20 µm, ganz besonders bevorzugt zwischen 8 µm und 15 µm dick. Die transparente elektrisch beheizbare Schicht ist beispielsweise 10 µm dick.

In Ausführungsformen, in denen das leitfähige Element, d.h. die transparente elektrisch beheizbare Schicht, als Beschichtung aufgebracht ist, ist das leitfähige Element, d.h. die transparente elektrisch beheizbare Schicht, bevorzugt zwischen 10 nm und 5000 nm, bevorzugt zwischen 10 nm und 100 nm dick.

Die elektrisch beheizbare transparente Substratschicht kann ein elektrisch leitfähiges Polymer enthalten oder daraus bestehen. Beispiele für leitfähige Polymere sind Poly-3,4-ethylendioxythiophen (PEDOT) mit Polystyrolsulfonat (PSS) als Gegenion, dotiertes Polyacetylen (PAC) und Polyanilin (PAni).

Die elektrisch beheizbare transparente Substratschicht ist bevorzugt zwischen 5 µm und 150 µm, besonders bevorzugt zwischen 10 µm und 100 µm, ganz besonders bevorzugt zwischen 50 µm und 100 µm dick. Die elektrisch beheizbare transparente Substratschicht ist beispielsweise 50 µm oder 100 µm dick.

Die elektrisch beheizbare opake Schicht kann ein elektrisch leitfähiges Polymer enthalten oder daraus bestehen. Beispiele für leitfähige Polymere sind Poly-3,4-ethylendioxythiophen (PEDOT) mit Polystyrolsulfonat (PSS) als Gegenion, dotiertes Polyacetylen (PAC) und Polyanilin (PAni).

Die elektrisch beheizbare opake Schicht ist bevorzugt zwischen 10 µm und 500 µm, besonders bevorzugt zwischen 100 µm und 200 µm, ganz besonders bevorzugt zwischen 125 µm und 180 µm dick. In bevorzugten Ausführungsformen ist die elektrisch beheizbare opake Schicht 125 µm oder 150 µm dick.

In bevorzugten Ausführungsformen ist die opake Schicht oder die elektrisch beheizbare opake Schicht zumindest abschnittsweise durchlässig für Infrarotstrahlung mit einer Wellenlänge im Bereich zwischen 800 nm und 1100 nm. In diesen Ausführungsformen ist die opake Schicht oder die elektrisch beheizbare opake Schicht somit zumindest abschnittsweise transparent für die Strahlung von Infrarot- oder light detection and ranging (LiDaR) Sensoren.

Die mindestens eine thermoplastische Zwischenschicht enthält bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Zwischenschicht beträgt bevorzugt von 0,2 mm bis 2 mm, besonders bevorzugt von 0,3 mm bis 1 mm, beispielsweise 0,38 mm oder 0,76 mm. Umfasst die Fahrzeugverbundscheibe zwei oder mehr thermoplastische Zwischenschichten, so können die einzelnen Zwischenschichten auch unterschiedlichen Materials sein.

In einer Ausführungsform umfasst die Fahrzeug-Verbundscheibe eine erste Scheibe und eine zweite Scheibe, die über genau eine thermoplastische Zwischenschicht miteinander verbunden sind. In diesem Fall ist das Einlegeelement zwischen der ersten Scheibe und der thermoplastischen Zwischenschicht oder zwischen der zweiten Scheibe und der thermoplastischen Zwischenschicht angeordnet.

In einer weiteren Ausführungsform umfasst die Fahrzeug-Verbundscheibe eine erste Scheibe und eine zweite Scheibe, die über mindestens zwei thermoplastische Zwischenschichten miteinander verbunden sind. In diesem Fall ist das Einlegeelement bevorzugt zwischen zwei der thermoplastischen Zwischenschichten angeordnet.

In einer bevorzugten Ausführungsform einer erfindungsgemäßen Fahrzeug-Verbundscheibe ist die opake Schicht oder die elektrisch beheizbare opake Schicht schwarz. Die opake Schicht oder die elektrisch beheizbare opake Schicht kann aber auch jede andere Farbe haben. Die opake Schicht oder die elektrisch beheizbare opake Schicht kann auch als eine durchgefärbte Schicht oder eine bedruckte Schicht realisiert werden.

Eine erfindungsgemäße Fahrzeug-Verbundscheibe kann zusätzlich einen Abdeckdruck, insbesondere aus einer dunklen, bevorzugt schwarzen, Emaille umfassen. Bevorzugt haben die opake Schicht oder die elektrisch beheizbare opake Schicht und der Abdeckdruck im Wesentlichen die gleiche optische Dichte. Bei dem Abdeckdruck handelt es sich insbesondere um einen peripheren, d.h. rahmenartigen, Abdeckdruck. Der periphere Abdeckdruck dient in erster Linie als UV-Schutz für den Montagekleber der Fahrzeug-Verbundscheibe. Der Abdeckdruck kann opak und vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung.

Eine "im Wesentlichen gleiche optische Dichte" bedeutet, dass die optischen Dichten zweier Materialien um maximal 5 %, bevorzugt um 3 %, besonders bevorzugt um maximal 2 % voneinander abweichen.

In einer bevorzugten Ausführungsform einer erfindungsgemäßen Fahrzeug-Verbundscheibe umfasst diese einen Abdeckdruck, der die gleiche Farbe wie die opake Schicht oder die elektrisch beheizbare opake Schicht hat.

Der Abdeckdruck ist üblicherweise auf der innenraumseitigen Oberfläche derjenigen Scheibe, die in Einbaulage die Außenscheibe darstellt, oder auf der innenraumseitigen Oberfläche derjenigen Scheibe, die in Einbaulage die Innenscheibe darstellt, aufgebracht.

In einer Ausführungsform umfasst die Fahrzeug-Verbundscheibe eine erste Scheibe und eine zweite Scheibe, die über genau eine thermoplastische Zwischenschicht miteinander verbunden sind und ein Abdeckdruck ist auf der Außenscheibe aufgebracht. In diesem Fall ist das Einlegeelement bevorzugt zwischen der Außenscheibe und der thermoplastischen Zwischenschicht angeordnet und die opake Schicht oder die elektrisch beheizbare opake Schicht des Einlegeelements ist besonders bevorzugt direkt benachbart zur Außenscheibe angeordnet.

In einer weiteren Ausführungsform umfasst die Fahrzeug-Verbundscheibe eine erste Scheibe und eine zweite Scheibe, die über genau eine thermoplastische Zwischenschicht miteinander verbunden sind und ein Abdeckdruck ist auf der innenraumseitigen Oberfläche der Innenscheibe aufgebracht. In diesem Fall ist das Einlegeelement bevorzugt zwischen der Innenscheibe und der thermoplastischen Zwischenschicht angeordnet und die opake Schicht oder die elektrisch beheizbare opake Schicht des Einlegeelements ist besonders bevorzugt direkt benachbart zur Innenscheibe angeordnet.

In einer weiteren Ausführungsform umfasst die Fahrzeug-Verbundscheibe eine erste Scheibe und eine zweite Scheibe, die über zwei thermoplastische Zwischenschichten miteinander verbunden sind und ein Abdeckdruck ist auf der innenraumseitigen Oberfläche der Innenscheibe aufgebracht. In diesem Fall ist das Einlegeelement bevorzugt zwischen der Innenscheibe und der der Innenscheibe benachbarten thermoplastischen Zwischenschicht oder zwischen den beiden thermoplastischen Zwischenschichten angeordnet.

In einer weiteren Ausführungsform umfasst die Fahrzeug-Verbundscheibe eine erste Scheibe und eine zweite Scheibe, die über zwei thermoplastische Zwischenschichten miteinander verbunden sind und ein Abdeckdruck ist auf der innenraumseitigen Oberfläche der Außenscheibe aufgebracht. In diesem Fall ist das Einlegeelement bevorzugt zwischen der Außenscheibe und der der Außenscheibe benachbarten thermoplastischen Zwischenschicht oder zwischen den beiden thermoplastischen Zwischenschichten angeordnet.

Bevorzugt ist die opake Schicht des Einlegeelements jeweils möglichst unmittelbar benachbart zu der Scheibe, auf der der Abdeckdruck aufgebracht ist, zwischen der ersten Scheibe und der zweiten Scheibe angeordnet. Bei einer derartigen Anordnung sind in Draufsicht von außen, die Zuleitungen und Anschlüsse der transparenten elektrisch beheizbaren Schicht oder der elektrisch beheizbaren transparenten Substratschicht durch die opake Schicht verdeckt. Alternativ können die Zuleitungen und Anschlüsse auch weitestgehend oder vollständig in die opake Schicht eingebettet sein.

Die erste Scheibe, die zweite Scheibe oder die mindestens eine thermoplastische Zwischenschicht können klar und farblos, aber auch getönt, getrübt oder gefärbt sein. Die Gesamttransmission durch die Fahrzeug-Verbundscheibe beträgt in einer bevorzugten Ausgestaltung größer 70%, insbesondere wenn die Fahrzeug-Verbundscheibe eine Windschutzscheibe ist. Der Begriff Gesamttransmission bezieht sich auf das durch ECE-R 43, Anhang 3, 9 9.1 festgelegte Verfahren zur Prüfung der Lichtdurchlässigkeit von Kraftfahrzeugscheiben. Die erste Scheibe und die zweite Scheibe können aus nicht vorgespanntem, teilvorgespanntem oder vorgespanntem Glas bestehen. Die Dicke der ersten Scheibe und der zweiten Scheibe beträgt typischerweise von 0,3 mm bis 5 mm, bevorzugt von 1 mm bis 3 mm, beispielsweise 2,1 mm.

Die Fahrzeug-Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Bevorzugt ist in das Einlegeelement in einer oberen Hälfte, besonders bevorzugt in einem oberen Drittel, ganz besonders bevorzugt in einem oberen Viertel der Fahrzeug-Verbundscheibe angeordnet. Bevorzugt ist das Einlegeelement in horizontaler Richtung im Wesentlichen mittig der Fahrzeug-Verbundscheibe angeordnet.

In einer bevorzugten Ausführungsform ist die Fahrzeug-Verbundscheibe eine Windschutzscheibe.

In einer Ausführungsform ist die Fahrzeug-Verbundscheibe eine Windschutzscheibe, die entlang einer Mittellinie spiegelsymmetrisch ist und das Einlegeelement ist auf der Mittellinie in der Nähe der Oberkante der Windschutzscheibe angeordnet.

In der Nähe der Oberkante bedeutet insbesondere, dass der Abstand zwischen dem Einlegeelement und der Oberkante maximal 30 mm, bevorzugt maximal 20 mm, besonders bevorzugt maximal 15 mm, ganz besonders bevorzugt maximal 10 mm beträgt.

In einer vorteilhaften Ausgestaltung der Erfindung ist die transparente elektrisch beheizbare Schicht, die elektrisch beheizbare Substratschicht oder die elektrisch beheizbare opake Schicht über Sammelleiter mit einer Spannungsquelle verbunden. Die Sammelleiter, sogenannte bus bars, dienen der Übertragung elektrischer Leistung. Beispiele geeigneter Sammelleiter sind aus DE 103 33 618 B3 und EP 0 025 755 B1 bekannt.

Die Sammelleiter werden vorteilhaft durch Aufdrucken einer leitfähigen Paste hergestellt. Die leitfähige Paste enthält bevorzugt Silber-Partikel und Glasfritten. Die Schichtdicke der eingebrannten leitfähigen Paste beträgt bevorzugt von 5 µm bis 20 µm.

In einer alternativen Ausgestaltung werden dünne und schmale Metallfolienstreifen oder Metalldrähte als Sammelleiter verwendet, die bevorzugt Kupfer und / oder Aluminium enthalten, insbesondere werden Kupferfolienstreifen mit einer Dicke von bevorzugt 10 µm bis 200 µm, beispielsweise etwa 50 µm verwendet. Die Breite der Kupferfolienstreifen beträgt bevorzugt 1 mm bis 10 mm.

Als Zuleitung zur Kontaktierung von Sammelleitern im Innern von Verbundscheiben werden im Fahrzeugbereich üblicherweise Folienleiter verwendet. Beispiele für Folienleiter werden in DE 42 35 063 A1, DE 20 2004 019 286 und DE 93 13 394U1 U1 beschrieben.

Ein weiterer Aspekt der Erfindung ist eine Anordnung, umfassend eine erfindungsgemäße Fahrzeug-Verbundscheibe und einen daran angebrachten optischen Sensor, der an der von der Zwischenschicht abgewandten, innenraumseitigen Oberfläche der Innenscheibe befestigt ist und auf das Sensorfenster der Fahrzeug-Verbundscheibe, also den Bereich der Aussparung in der opaken Schicht oder der elektrisch beheizbaren opaken Schicht oder auf den nicht opak eingefärbten Bereich der transparenten Substratschicht gerichtet ist. Der Detektionsstrahlengang des Sensors verläuft also durch die Aussparung in der opaken Schicht oder der elektrisch beheizbaren opaken Schicht oder durch den nicht opak eingefärbten Bereich der transparenten Substratschicht hindurch. Der optische Sensor ist bevorzugt eine optische Kamera, das heißt eine Kamera mit Empfindlichkeit im sichtbaren Spektralbereich, beispielsweise eine Fahrspur-Kamera oder eine Kamera für ein *Augmented* Reality-Head-Up-Display.

Die Erfindung betrifft auch ein Verfahren zur Herstellung einer Fahrzeug-Verbundscheibe, mindestens umfassend die folgenden Schritte:
(a) Bereitstellen einer ersten Scheibe, einer zweiten Scheibe, mindestens einer thermoplastischen Zwischenschicht und eines Einlegeelements, mindestens umfassend eine opake Schicht, die mindestens eine Aussparung aufweist, eine transparente Substratschicht und eine transparente elektrisch beheizbare Schicht;
(b) Anordnen der mindestens einen thermoplastischen Zwischenschicht und des Einlegeelements zwischen der ersten Scheibe und der zweiten Scheibe; und
(c) Verbinden der ersten Scheibe mit der zweiten Scheibe über die mindestens eine thermoplastische Zwischenschicht durch Lamination.

Die Anordnung der opaken Schicht, die mindestens eine Aussparung aufweist, der transparenten Substratschicht und der transparenten elektrisch beheizbaren Schicht des Einlegeelements bei der Bereitstellung des Einlegeelements kann manuell oder maschinell, beispielsweise mittels eines Roboters, erfolgen. Das Einlegeelement kann wie in den oben beschriebenen verschiedenen Ausführungsformen ausgebildet sein. Die Schichtenabfolge in dem Einlegeelement kann wie oben in den verschiedenen Ausführungsformen beschrieben sein. Wie oben beschrieben können die transparente Substratschicht und die transparente elektrisch beheizbare Schicht auch einstückig als eine elektrisch beheizbare transparente Substratschicht ausgebildet sein. Auch können in dem Einlegeelement die opake Schicht und die transparente elektrisch beheizbare Schicht einstückig als eine elektrisch beheizbare opake Schicht, die mindestens eine Aussparung aufweist, ausgebildet sein und die transparente Substratschicht ist vollflächig direkt benachbart zu der elektrisch beheizbaren opaken Schicht und der mindestens einen Aussparung angeordnet oder die transparente Substratschicht ist vollständig in der mindestens einen Aussparung der elektrisch beheizbaren opaken Schicht angeordnet.

Die Anordnung des Einlegeelements zwischen der ersten Scheibe und der zweiten Scheibe kann manuell oder maschinell, beispielsweise mittels eines Roboters, erfolgen.

Soll die Fahrzeug-Verbundscheibe eine Biegung aufweisen, wie insbesondere für Personenkraftwagen üblich, so werden die Scheiben vor dem Laminieren einem Biegeprozess unterzogen, beispielsweise durch Schwerkraftbiegen, Saugbiegen und/oder Pressbiegen. Typische Biegetemperaturen betragen von 500°C bis 700°C.

Bevorzugt wird vor dem Laminieren und vor dem optionalen Biegen ein opaker Abdeckdruck insbesondere auf den Randbereich der ersten Scheibe und/oder der zweiten Scheibe aufgebracht. Dazu wird typischerweise eine schwarze oder dunkle Emaille per Siebdruck aufgebracht und vor dem Laminieren, insbesondere vor dem Biegen oder während des Biegens, eingebrannt.

Die vorstehend im Zusammenhang mit der Fahrzeug-Verbundscheibe beschriebenen Ausgestaltungen gelten in gleicher Weise für das erfindungsgemäße Verfahren.

Die Erfindung betrifft auch die Verwendung einer erfindungsgemäßen Fahrzeug-Verbundscheibe als Windschutzscheibe eines Fahrzeugs, bevorzugt eines Kraftfahrzeugs.

Die verschiedenen Ausgestaltungen der Erfindung können einzeln oder in beliebigen Kombinationen realisiert sein. Insbesondere sind die vorstehend genannten und nachstehend erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: eine Draufsicht auf eine Ausgestaltung der erfindungsgemäßen Fahrzeug-Verbundscheibe,
- Fig. 2: einen Querschnitt durch die erfindungsgemäße Fahrzeug-Verbundscheibe der Fig. 1 entlang der Linie A-A`,
- Fig. 3: einen Querschnitt durch eine weitere Ausführungsform einer erfindungsgemäßen Fahrzeug-Verbundscheibe entlang der Linie A-A`,
- Fig. 4: einen Querschnitt durch eine Ausführungsform eines Einlegeelements,
- Fig. 5: einen Querschnitt durch eine weitere Ausführungsform eines Einlegeelements
- Fig. 6: einen Querschnitt durch eine weitere Ausführungsform eines Einlegeelements,
- Fig. 7: einen Querschnitt durch eine weitere Ausführungsform eines Einlegeelements,
- Fig. 8: einen Querschnitt durch eine weitere Ausführungsform eines Einlegeelements,
- Fig. 9: einen Querschnitt durch eine weitere Ausführungsform eines Einlegeelements,
- Fig. 10: einen Querschnitt durch eine weitere Ausführungsform eines Einlegeelements,
- Fig. 11: eine Draufsicht auf eine weitere Ausgestaltung der erfindungsgemäßen Fahrzeug-Verbundscheibe,
- Fig. 12: eine Draufsicht auf eine weitere Ausgestaltung der erfindungsgemäßen Fahrzeug-Verbundscheibe,
- Fig. 13: eine Draufsicht auf eine weitere Ausgestaltung der erfindungsgemäßen Fahrzeug-Verbundscheibe,
- Fig. 14: eine Draufsicht auf eine weitere Ausgestaltung der erfindungsgemäßen Fahrzeug-Verbundscheibe,
- Fig. 15: eine Draufsicht auf eine weitere Ausgestaltung der erfindungsgemäßen Fahrzeug-Verbundscheibe,
- Fig. 16: ein Flussdiagramm einer Ausführungsform des erfindungsgemäßen Verfahrens.

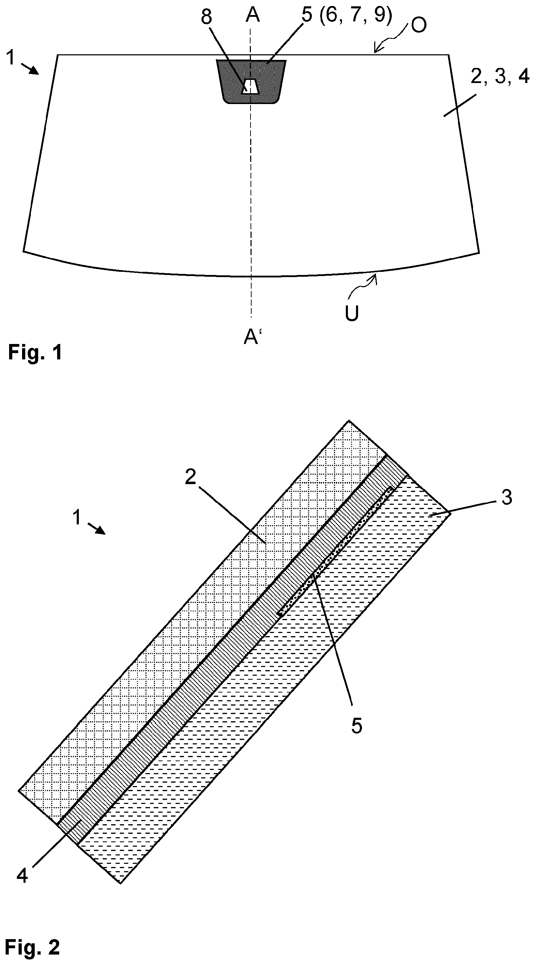

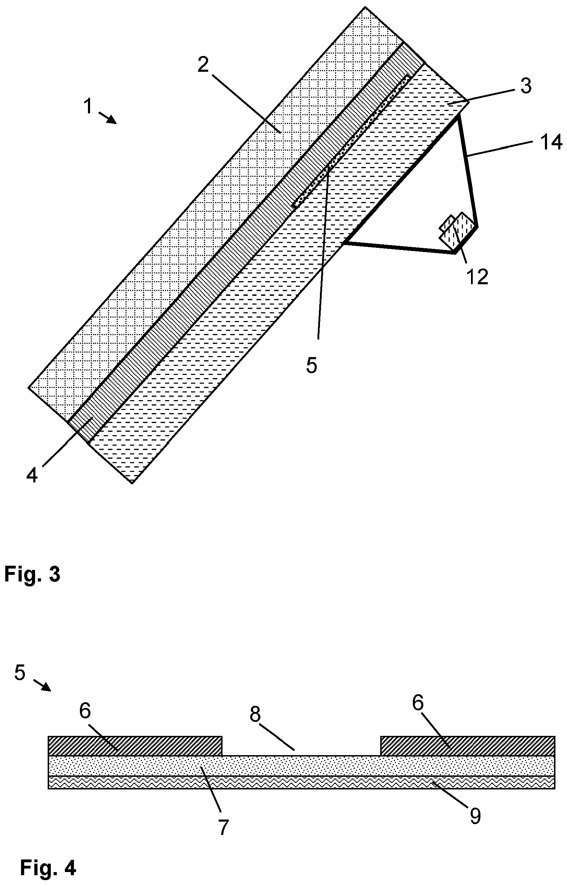

Fig. 1 zeigt eine Ausführungsform der erfindungsgemäßen Fahrzeug-Verbundscheibe 1 und in der Fig. 2 ist der Querschnitt durch die erfindungsgemäße Fahrzeug-Verbundscheibe 1 gemäß Fig. 1 entlang der Linie A-A`, die der Mittellinie entspricht, gezeigt. Die in der Fig. 1 gezeigte Fahrzeug-Verbundscheibe 1 ist entlang der Mittellinie spiegelsymmetrisch und das Einlegeelement 5 ist auf der Mittellinie in der Nähe der Oberkante O angeordnet. In der in Fig. 1 und 2 gezeigten Ausführungsform umfasst die Fahrzeug-Verbundscheibe 1 eine erste Scheibe 2 und eine zweite Scheibe 3, die über eine thermoplastische Zwischenschicht 4 flächig miteinander verbunden sind. In der in den Fig. 1 und 2 gezeigten Ausführungsform ist die erste Scheibe 2 die Außenscheibe und die zweite Scheibe 3 die Innenscheibe. Die erste Scheibe 2 und die zweite Scheibe 3 bestehen aus Kalk-Natron-Glas und weisen beispielsweise eine Dicke von 2,1 mm auf. Zwischen der zweiten Scheibe 3 und der thermoplastischen Zwischenschicht 4 ist ein Einlegelement 5 angeordnet, das eine Aussparung 8 aufweist. In der in der Fig. 1 und 2 gezeigten Ausführungsform ist das Einlegelement 5 zwischen der zweiten Scheibe 3 und der thermoplastischen Zwischenschicht 4 angeordnet. Das Einlegeelement 5 kann aber auch zwischen der ersten Scheibe 2 und der thermoplastischen Zwischenschicht 4 angeordnet sein. Zudem kann die erfindungsgemäße Fahrzeug-Verbundscheibe 1 auch mehr als eine thermoplastische Zwischenschicht 4 umfassen. Die thermoplastische Zwischenschicht 4 besteht in der in den Fig. 1 und 2 gezeigten Ausführungsform aus Polyvinylbutyral (PVB) und ist 0,76 mm dick. Das Einlegeelement ist in der in der Fig. 2 gezeigten Ausführungsform wie in der Fig. 4 dargestellt aufgebaut. Die Aussparung 8 ist in der in der Fig. 1 und 2 gezeigten Ausführungsform trapezförmig und hat eine Fläche von 35 cm². Es ist aber auch jede andere für ein Sensorfenster geeignete Form möglich. Das Einlegeelement 5 weist in der in der Fig. 1 und 2 gezeigten Ausführungsform eine trapezförmige Form, bei der die zur Unterkante weisenden Ecken abgerundet sind, auf. Es ist aber auch jede andere für die Abdeckung eines Sensors geeignete äußere Form des Einlegeelements 5 möglich. In der in der Fig. 1 und 2 gezeigten Ausführungsform ist die opake Schicht 6 dunkelgrau. Sie kann aber auch eine andere Farbe haben, beispielsweise schwarz sein. Die zweite Scheibe 3 ist in der in der Fig. 1 und 2 gezeigten Ausführungsform die Innenscheibe, welche in Einbaulage dem Innenraum des Fahrzeugs zugewandt ist.

Die Fahrzeug-Verbundscheibe 1 weist eine Oberkante O und eine Unterkante U auf. Die Oberkante O weist in Einbaulage nach oben zum Fahrzeugdach, die Unterkante U weist in Einbaulage nach unten zum Motorraum. Die innenraumseitige Oberfläche der Außenscheibe (erste Scheibe 2) ist über die thermoplastische Zwischenschicht 4 mit der außenseitigen Oberfläche der Innenscheibe (zweite Scheibe 3) verbunden. Üblicherweise wird die außenseitige Oberfläche der Außenscheibe als "Seite I" bezeichnet, die innenraumseitige Oberfläche der Außenscheibe als "Seite II", die außenseitige Oberfläche der Innenscheibe als "Seite III" und die innenraumseitige Oberfläche der Innenscheibe als "Seite IV".

In der Fig. 3 ist eine weitere Ausführungsform einer erfindungsgemäßen Fahrzeug-Verbundscheibe 1 gezeigt, die sich von der in der Fig. 2 gezeigten Ausführungsform nur dahingehend unterscheidet, dass diese zusätzlich einen auf die Aussparung 8 gerichteten optischen Sensor 12, der über eine Halterung 14 innenraumseitig an der als Innenscheibe ausgebildeten zweiten Scheibe 3 angebracht ist, umfasst. Der optische Sensor 12 ist beispielsweise eine Fahrspurkamera. Die Detektionsrichtung des optischen Sensors 12 ist außenseitig der Fahrzeug-Verbundscheibe 1 in etwa horizontal nach vorne gerichtet. Strahlung, die in einem sogenannten Sensorfenster, das in der Fig. 3 gezeigten Ausführungsform dem Bereich der Aussparung 8 entspricht, horizontal durch die Fahrzeug-Verbundscheibe 1 tritt, wird durch den optischen Sensor 12 detektiert.

In der Fig. 4 ist der Querschnitt durch eine Ausführungsform eines Einlegeelements 5, d.h. der Querschnitt eines Einlegeelement 5 in einer Ausführungsform einer erfindungsgemäßen Fahrzeug-Verbundscheibe 1 gezeigt. In der in der Fig. 4 gezeigten Ausführungsform besteht das Einlegeelement 5 aus einer transparenten Substratschicht 7, einer transparenten elektrisch beheizbaren Schicht 9 und einer opaken Schicht 6, die eine Aussparung 8 aufweist. Die transparente Substratschicht 7 ist zwischen der opaken Schicht 6 und der transparenten elektrisch beheizbaren Schicht 9 angeordnet. In der in der Fig. 4 gezeigten Ausführungsform ist beispielsweise die transparente Substratschicht 7 eine PET-Folie mit einer Dicke von 100 µm, die transparente elektrisch beheizbare Schicht 9 eine auf die transparente Substratschicht 7 aufgebrachte elektrisch beheizbare ITO-Beschichtung mit einer Dicke von 10 µm und die opake Schicht 6 eine PET-Folie mit einer Dicke von 125 µm. Die transparente Substratschicht 7, die transparente elektrisch beheizbare Schicht 9 und die opake Schicht 6 mit der Aussparung 8 weisen dieselben äußeren Abmessungen auf.

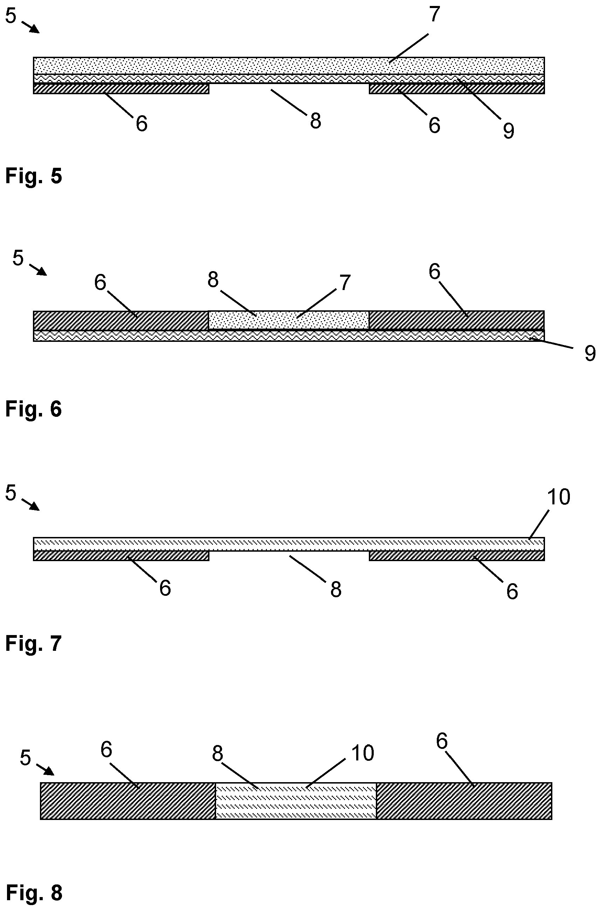

In der Fig. 5 ist der Querschnitt durch eine weitere Ausführungsform eines Einlegeelements 5 gezeigt. In der in der Fig. 5 gezeigten Ausführungsform besteht das Einlegeelement 5 aus einer transparenten Substratschicht 7, einer transparenten elektrisch beheizbaren Schicht 9 und einer opaken Schicht 6, die eine Aussparung 8 aufweist. Die transparente elektrisch beheizbare Schicht 9 ist zwischen der opaken Schicht 6 und der transparenten Substratschicht 7 angeordnet. In der in der Fig. 5 gezeigten Ausführungsform ist beispielsweise die transparente Substratschicht 7 eine PET-Folie mit einer Dicke von 100 µm, die transparente elektrisch beheizbare Schicht 9 eine auf die transparente Substratschicht 7 aufgebrachte elektrisch beheizbare Silberbeschichtung mit einer Dicke von 10 µm und die opake Schicht 6 eine PET-Folie mit einer Dicke von 125 µm. Die transparente Substratschicht 7, die transparente elektrisch beheizbare Schicht 9 und die opake Schicht 6 mit der Aussparung 8 weisen dieselben äußeren Abmessungen auf.

In der Fig. 6 ist der Querschnitt durch eine weitere Ausführungsform eines Einlegeelements 5 gezeigt. In der in der Fig. 6 gezeigten Ausführungsform besteht das Einlegeelement 5 aus einer transparenten Substratschicht 7, einer transparenten elektrisch beheizbaren Schicht 9 und einer opaken Schicht 6, die eine Aussparung 8 aufweist. Die transparente Substratschicht 7 ist vollständig in der mindestens einen Aussparung 8 der opaken Schicht 6 angeordnet. Die transparente Substratschicht 7 weist dieselbe Dicke wie die opake Schicht 6 auf und ist von dieser in der in der Fig. 6 gezeigten Ausführungsform rahmenartig umgeben. Die transparente elektrisch beheizbare Schicht 9 ist in der in der Fig. 6 gezeigten Ausführungsform vollflächig direkt benachbart zur opaken Schicht 6 und zur transparenten Substratschicht 7 angeordnet. In der in der Fig. 6 gezeigten Ausführungsform ist beispielsweise die transparente Substratschicht 7 eine PET-Folie mit einer Dicke von 150 µm, die transparente elektrisch beheizbare Schicht 9 eine Graphenschicht mit einer Dicke von 20 µm und die opake Schicht 6 ist eine PET-Folie mit einer Dicke von 150 µm. Alternativ ist auch möglich, dass die transparente Substratschicht 7 und die opake Schicht 6 einstückig ausgebildet und die transparente Substratschicht 7 in den Bereichen, die in der Fig. 6 mit dem Bezugszeichen 6 versehen sind, opak eingefärbt ist. Eine separate opake Schicht 6 ist in diesen Ausführungsformen nicht notwendig.

Fig. 7 zeigt den Querschnitt durch eine weitere Ausführungsform eines Einlegeelements 5. In der in der Fig. 7 gezeigten Ausführungsform besteht das Einlegeelement 5 aus einer opaken Schicht 6, die eine Aussparung 8 aufweist, und einer unmittelbar benachbart dazu angeordneten elektrisch beheizbaren transparenten Substratschicht 10. Somit liegen in der in der Fig. 7 gezeigten Ausführungsform die transparente Substratschicht 7 und die transparente elektrisch beheizbare Schicht 9 nicht als zwei separate Schichten vor, sondern sind einstückig als die elektrisch beheizbare transparente Substratschicht 10 ausgebildet. In der in der Fig. 7 gezeigten Ausführungsform besteht beispielsweise die elektrisch beheizbare transparente Substratschicht 10 aus einem elektrisch leitfähigem Polymer, wie beispielsweise Polyanilin mit einer Dicke von 100 µm und die opake Schicht 6 ist eine PET-Folie mit einer Dicke von 75 µm.

Fig. 8 zeigt den Querschnitt durch eine weitere Ausführungsform eines Einlegeelements 5. In der in der Fig. 8 gezeigten Ausführungsform besteht das Einlegeelement 5 aus einer opaken Schicht 6, die eine Aussparung 8 aufweist, und einer vollständig in der Aussparung 8 angeordneten elektrisch beheizbaren transparenten Substratschicht 10. Die elektrisch beheizbare transparente Substratschicht 10 ist somit rahmenartig von der opaken Schicht 6 umgeben. In der in der Fig. 8 gezeigten Ausführungsform liegen die transparente Substratschicht 7 und die transparente elektrisch beheizbare Schicht 9 nicht als zwei separate Schichten vor, sondern sind einstückig als die elektrisch beheizbare transparente Substratschicht 10 ausgebildet. In der in der Fig. 8 gezeigten Ausführungsform besteht beispielsweise die elektrisch beheizbare transparente Substratschicht 10 aus einem elektrisch leitfähigem Polymer, wie beispielsweise Polyanilin mit einer Dicke von 150 µm und die opake Schicht 6 eine PET-Folie mit einer Dicke von 150 µm.

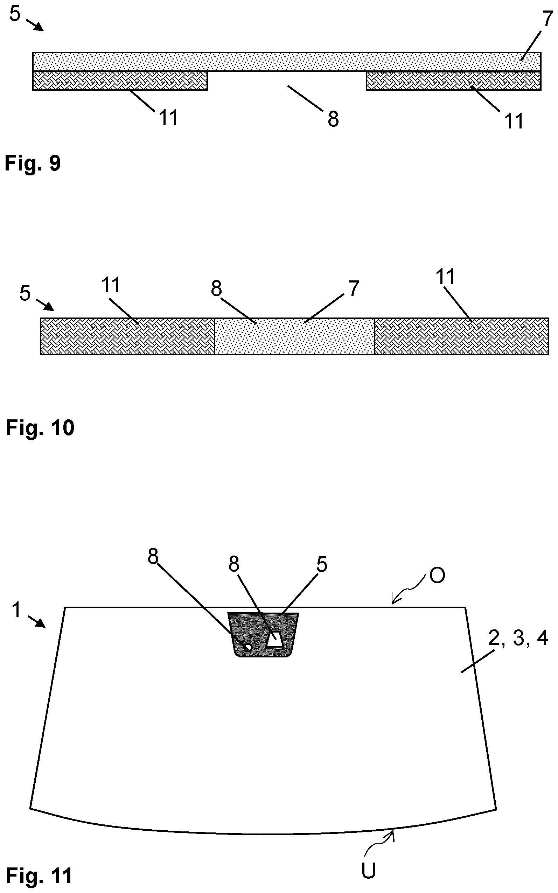

Fig. 9 zeigt den Querschnitt durch eine weitere Ausführungsform eines Einlegeelements 5. In der in der Fig. 9 gezeigten Ausführungsform besteht das Einlegeelement 5 aus einer transparenten Substratschicht 7 und einer dazu unmittelbar benachbart angeordneten elektrisch beheizbaren opaken Schicht 11. Somit liegen in der in der Fig. 9 gezeigten Ausführungsform die opake Schicht 6 und die transparente elektrisch beheizbare Schicht 9 nicht als zwei separate Schichten vor, sondern sind einstückig als die elektrisch beheizbare opake Schicht 11 ausgebildet. Die elektrisch beheizbare opake Schicht 11 weist eine Aussparung 8 auf. In der in der Fig. 9 gezeigten Ausführungsform besteht beispielsweise die elektrisch beheizbare opake Schicht 11 aus einem gefärbten elektrisch leitfähigem Polymer, wie beispielsweise Polyanilin mit einer Dicke von 100 µm und die transparente Substratschicht 7 ist ein Dünnglas mit einer Dicke von 0,1 mm. Die transparente Substratschicht 7 und die elektrisch beheizbare opake Schicht 11 mit der Aussparung 8 weisen dieselben äußeren Abmessungen auf.

Fig. 10 zeigt den Querschnitt durch eine weitere Ausführungsform eines Einlegeelements 5. In der in der Fig. 10 gezeigten Ausführungsform besteht das Einlegeelement 5 aus einer transparenten Substratschicht 7 und einer elektrisch beheizbaren opaken Schicht 11. Somit liegen in der in der Fig. 10 gezeigten Ausführungsform die opake Schicht 6 und die transparente elektrisch beheizbare Schicht 9 nicht als zwei separate Schichten vor, sondern sind einstückig als eine elektrisch beheizbare opake Schicht 11 ausgebildet. Die elektrisch beheizbare opake Schicht 11 weist eine Aussparung 8 auf. Die in der Fig. 10 gezeigte Ausführungsform unterscheidet sich von der in der Fig. 9 im Querschnitt gezeigten Ausführungsform des Einlegeelements 5 insbesondere dahingehend, dass die transparente Substratschicht 7 vollständig in der Aussparung 8 der elektrisch beheizbaren opaken Schicht 11 angeordnet ist. Die transparente Substratschicht 7 weist dieselbe Dicke wie die elektrisch beheizbare opake Schicht 11 auf und ist von dieser in der in der Fig. 10 gezeigten Ausführungsform rahmenartig umgeben. In der in der Fig. 10 gezeigten Ausführungsform besteht beispielsweise die elektrisch beheizbare opake Schicht 11 aus einem gefärbten elektrisch leitfähigem Polymer, wie beispielsweise Polyanilin mit einer Dicke von 125 µm und die transparente Substratschicht 7 ist eine PVB-Folie mit einer Dicke von 125 µm.

In der Fig. 11 ist eine weitere Ausführungsform einer erfindungsgemäßen Fahrzeug-Verbundscheibe 1 gezeigt. Die in der Fig. 11 dargestellte Fahrzeug-Verbundscheibe 1 unterscheidet sich von der in der Fig. 1 dargestellten Ausführungsform nur dahingehend, dass das Einlegeelement 5 zwei Aussparungen 8 aufweist, wobei eine Aussparung 8 trapezförmig und eine Aussparung 8 kreisförmig ist.

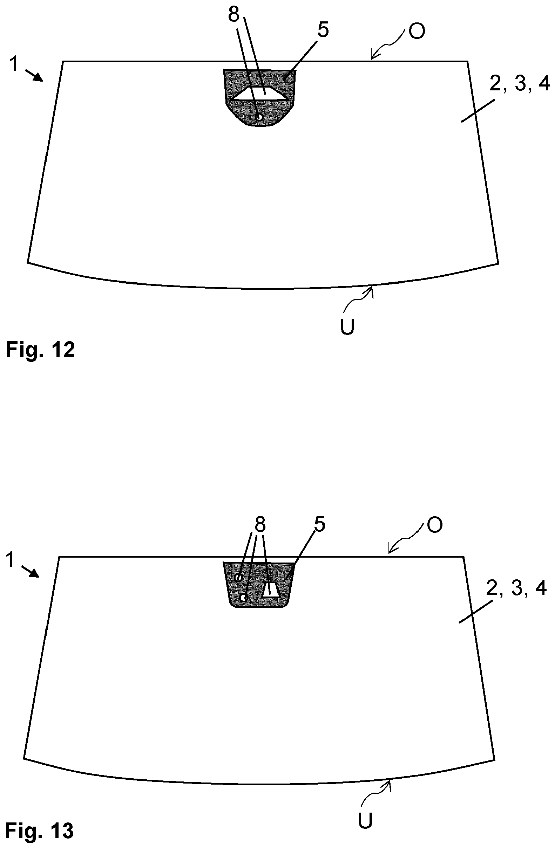

In der Fig. 12 ist eine weitere Ausführungsform einer erfindungsgemäßen Fahrzeug-Verbundscheibe 1 gezeigt. Die in der Fig. 12 dargestellte Fahrzeug-Verbundscheibe 1 unterscheidet sich von der in der Fig. 11 dargestellten Ausführungsform nur dahingehend, dass die trapezförmige Aussparung 8 größer ist und die Aussparungen 8 nicht nebeneinander, sondern übereinander angeordnet sind. Zudem unterscheidet sich die äußere Form des Einlegeelements 5 bei der in der Fig. 12 gezeigten Ausführungsform von der äußeren Form des Einlegeelements 5 bei der in der Fig. 11 gezeigten Ausführungsform.

In der Fig. 13 ist eine weitere Ausführungsform einer erfindungsgemäßen Fahrzeug-Verbundscheibe 1 gezeigt. Die in der Fig. 13 dargestellte Fahrzeug-Verbundscheibe 1 unterscheidet sich von der in der Fig. 11 dargestellten Ausführungsform nur dahingehend, dass das Einlegeelement 5 drei Aussparungen 8 aufweist, von denen eine trapezförmig und zwei kreisförmig sind.

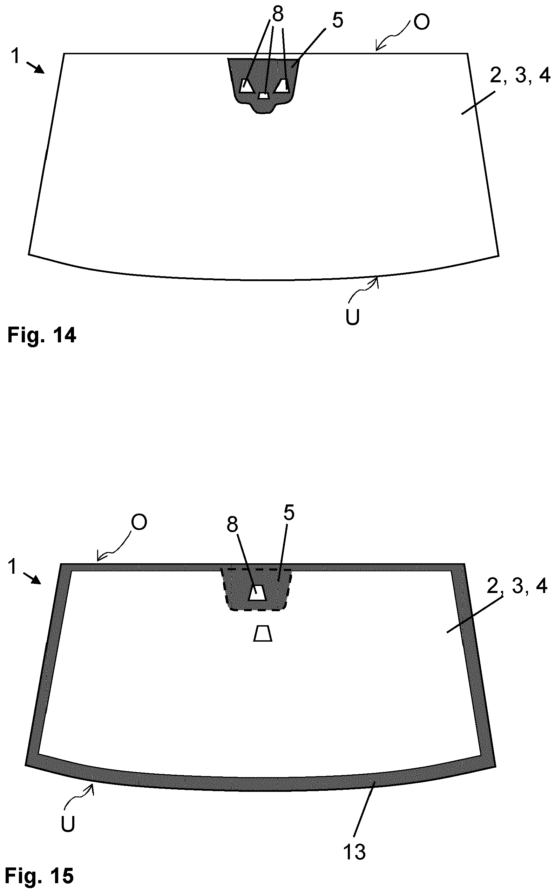

Fig. 14 zeigt eine weitere Ausführungsform einer erfindungsgemäßen Fahrzeug-Verbundscheibe 1. Diese unterscheidet sich von der in der Fig. 13 dargestellten Ausführungsform dahingehend, dass die drei Aussparungen 8 trapezförmig und neben einander angeordnet sind und dass das Einlegeelement 5 in der Mitte in Richtung der Unterkante U verlängert ist.

In der Fig. 15 ist eine weitere Ausführungsform einer erfindungsgemäßen Fahrzeug-Verbundscheibe 1 dargestellt. Die in der Fig. 15 dargestellte Fahrzeug-Verbundscheibe 1 unterscheidet sich von der in der Fig. 1 dargestellten nur dahingehend, dass sie zusätzlich einen peripheren Abdeckdruck 13 aus Emaille umfasst. Die opake Schicht 6 (in Fig. 15 nicht explizit dargestellt) des Einlegeelements 5 und der periphere Abdeckdruck 13 haben im Wesentlichen die gleiche optische Dichte und sind in der in Fig. 15 gezeigten Ausführungsform dunkelgrau. Zur Verdeutlichung wo das Einlegeelement 5 in der in Fig. 15 gezeigten Ausführungsform angeordnet ist, ist dieses in der Fig. 15 mit einer schwarzgestrichelten Umrandung gekennzeichnet. In der in Fig. 15 gezeigten Ausführungsform ist der periphere Abdeckdruck 13 nur benachbart zu den äußeren Kanten der Fahrzeug-Verbundscheibe 1 aufgebracht. Es ist aber auch möglich, dass zusätzlich auch noch ein Abdeckdruck 13 außen um das Einlegeelement 5 herum aufgebracht wird.

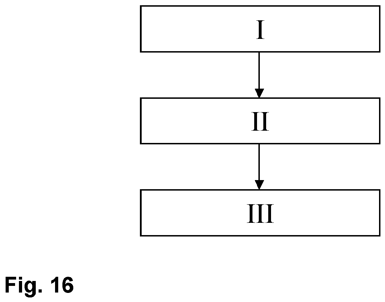

In der Fig. 16 ist das Fließdiagramm eines erfindungsgemäßen Verfahrens zur Herstellung einer erfindungsgemäßen Fahrzeug-Verbundscheibe 1 dargestellt. In einem ersten Schritt I werden eine erste Scheibe 2, eine zweite Scheibe 3, mindestens eine thermoplastische Zwischenschicht 4 und ein Einlegeelement 5, mindestens umfassend eine opake Schicht 6, die mindestens eine Aussparung 8 aufweist, eine transparente Substratschicht 7 und eine transparente elektrisch beheizbare Schicht 9, bereitgestellt. In einem zweiten Schritt II werden die mindestens eine thermoplastische Zwischenschicht 4 und das Einlegeelement 5 zwischen der ersten Scheibe 2 und der zweiten Scheibe 3 angeordnet. In einem dritten Schritt III wird die erste Scheibe 2 mit der zweiten Scheibe 3 über die mindestens eine thermoplastische Zwischenschicht 4 durch Lamination verbunden.

Weitere Merkmale der Erfindung ergeben sich aus der nachfolgenden Erfindungsbeschreibung:
Die Erfindung betrifft eine Fahrzeug-Verbundscheibe (1), mindestens umfassend
- eine erste Scheibe (2) und eine zweite Scheibe (3), die über mindestens eine thermoplastische Zwischenschicht (4) miteinander verbunden sind, und
- ein Einlegeelement (5), mindestens umfassend eine opake Schicht (6), die mindestens eine Aussparung (8) aufweist, eine transparente Substratschicht (7) und eine transparente elektrisch beheizbare Schicht (9), wobei das Einlegeelement (5) zwischen der ersten Scheibe (2) und der zweiten Scheibe (3) angeordnet ist.

Die nachfolgenden Ausgestaltungen können in beliebiger Weise miteinander kombiniert sein, sofern keine Alternativen formuliert sind.

Gemäß einer Ausgestaltung der Fahrzeug-Verbundscheibe (1) ist im Einlegeelement (5) die transparente Substratschicht (7) zwischen der opaken Schicht (6) und der transparenten elektrisch beheizbaren Schicht (9) angeordnet.

Gemäß einer Ausgestaltung der Fahrzeug-Verbundscheibe (1) ist im Einlegeelement (5) die transparente elektrisch beheizbare Schicht (9) zwischen der transparenten Substratschicht (7) und der opaken Schicht (6) angeordnet.

Gemäß einer Ausgestaltung der Fahrzeug-Verbundscheibe (1) ist im Einlegeelement (5) die transparente Substratschicht (7) vollständig in der mindestens einen Aussparung (8) der opaken Schicht (6) angeordnet ist und die transparente elektrisch beheizbare Schicht (9) vollflächig direkt benachbart zur opaken Schicht (6) und zur transparenten Substratschicht (7) angeordnet.

Gemäß einer Ausgestaltung der Fahrzeug-Verbundscheibe (1) sind im Einlegeelement (5) die transparente Substratschicht (7) und die transparente elektrisch beheizbare Schicht (9) einstückig als eine elektrisch beheizbare transparente Substratschicht (10) ausgebildet.

Gemäß einer Ausgestaltung der Fahrzeug-Verbundscheibe (1) sind im Einlegeelement (5) die opake Schicht (6) und die transparente elektrisch beheizbare Schicht (9) einstückig als eine elektrisch beheizbare opake Schicht (11), die mindestens eine Aussparung (8) aufweist, ausgebildet und die transparente Substratschicht (7) ist vollflächig direkt benachbart zur elektrisch beheizbaren opaken Schicht (11) und der mindestens einen Aussparung (8) angeordnet oder vollständig in der mindestens einen Aussparung (8) der elektrisch beheizbaren opaken Schicht (11) angeordnet.

Gemäß einer Ausgestaltung der Fahrzeug-Verbundscheibe (1) ist die mindestens eine Aussparung (8) ein Sensorfenster für einen optischen Sensor (12).

Gemäß einer Ausgestaltung der Fahrzeug-Verbundscheibe (1) enthält die opake Schicht (6) Polyethylenterephthalat (PET) oder Polyethylen (PE), bevorzugt PET, oder besteht daraus.

Gemäß einer Ausgestaltung der Fahrzeug-Verbundscheibe (1) umfasst die transparente Substratschicht (7) ein Thermoplast oder ein Duroplast oder ist eine Glasschicht, die eine Dicke von kleiner oder gleich 0,5 mm aufweist.

Gemäß einer Ausgestaltung der Fahrzeug-Verbundscheibe (1) ist die transparente elektrisch beheizbare Schicht (9) eine elektrisch beheizbare Beschichtung, eine Kohlenstoff enthaltende Schicht oder eine metallische Schicht oder enthält ein elektrisch leitfähiges Polymer oder besteht daraus.

Gemäß einer Ausgestaltung der Fahrzeug-Verbundscheibe (1) enthält die elektrisch beheizbare transparente Substratschicht (10) oder die elektrisch beheizbare opake Schicht (11) ein elektrisch leitfähiges Polymer oder besteht daraus.

Gemäß einer Ausgestaltung der Fahrzeug-Verbundscheibe (1) ist die opake Schicht (6) oder die elektrisch beheizbare opake Schicht (11) zumindest abschnittsweise durchlässig für Infrarotstrahlung mit einer Wellenlänge im Bereich zwischen 800 nm und 1100 nm.

Gemäß einer Ausgestaltung der Fahrzeug-Verbundscheibe (1) ist die Fahrzeug-Verbundscheibe (1) eine Windschutzscheibe, die entlang einer Mittellinie spiegelsymmetrisch ist, und das Einlegeelement (5) auf der Mittellinie in der Nähe der Oberkante (O) der Windschutzscheibe angeordnet ist.

Die Erfindung betrifft weiterhin ein Verfahren zur Herstellung einer Fahrzeug-Verbundscheibe (1) wie sie vorstehend beschrieben ist, wobei
(a) eine erste Scheibe (2), eine zweite Scheibe (3), mindestens eine thermoplastische Zwischenschicht (4) und ein Einlegeelement (5), mindestens umfassend eine opake Schicht (6), die mindestens eine Aussparung (8) aufweist, eine transparente Substratschicht (7) und eine transparente elektrisch beheizbare Schicht (9), bereitgestellt werden;
(b) die mindestens eine thermoplastische Zwischenschicht (4) und das Einlegeelement (5) zwischen der ersten Scheibe (2) und der zweiten Scheibe (3) angeordnet werden; und
(c) die erste Scheibe (2) über die mindestens eine thermoplastische Zwischenschicht (4) mit der zweiten Scheibe (3) durch Lamination verbunden wird.

Die Erfindung betrifft weiterhin die Verwendung einer Fahrzeug-Verbundscheibe (1) wie sie vorstehend beschrieben ist als Windschutzscheibe eines Fahrzeugs, bevorzugt eines Kraftfahrzeugs.

### Bezugszeichenliste:

- 1: Fahrzeug-Verbundscheibe
- 2: erste Scheibe
- 3: zweite Scheibe
- 4: thermoplastische Zwischenschicht
- 5: Einlegeelement
- 6: opake Schicht
- 7: transparente Substratschicht
- 8: Aussparung
- 9: transparente elektrisch beheizbare Schicht
- 10: elektrisch beheizbare transparente Substratschicht
- 11: elektrisch beheizbare opake Schicht
- 12: optischer Sensor
- 13: Abdeckdruck
- 14: Halterung

- O: Oberkante/Dachkante der Fahrzeug-Verbundscheibe
- U: Unterkante/Motorkante der Fahrzeug-Verbundscheibe

## Patentansprüche

1. Fahrzeug-Verbundscheibe (1), mindestens umfassend
- eine erste Scheibe (2) und eine zweite Scheibe (3), die über mindestens eine thermoplastische Zwischenschicht (4) miteinander verbunden sind, und
- ein Einlegeelement (5), mindestens umfassend eine transparente Substratschicht (7) und eine elektrisch beheizbare opake Schicht (11), die mindestens eine Aussparung (8) aufweist, wobei
i) die transparente Substratschicht (7) vollflächig direkt benachbart zur elektrisch beheizbaren opaken Schicht (11) und der mindestens einen Aussparung (8) angeordnet ist, oder
ii) die transparente Substratschicht (7) vollständig in der mindestens einen
Aussparung (8) der elektrisch beheizbaren opaken Schicht (11) angeordnet ist, wobei das Einlegeelement (5) zwischen der ersten Scheibe (2) und der zweiten Scheibe (3) angeordnet ist.

2. Fahrzeug-Verbundscheibe (1) nach Anspruch 1, bei welcher die elektrisch beheizbare opake Schicht (11) mehr als eine Aussparung (8) aufweist, wobei in jeder dieser Aussparungen (8) ein Teilstück der transparenten Substratschicht (7) angeordnet ist, wobei jedes dieser Teilstücke rahmenartig von der elektrisch beheizbaren opaken Schicht (11) umgeben ist.

3. Fahrzeug-Verbundscheibe (1) nach Anspruch 1 oder 2, bei welcher die mindestens eine Aussparung (8) ein Sensorfenster für einen optischen Sensor (12) ist.

4. Fahrzeug-Verbundscheibe (1) nach einem der Ansprüche 1 bis 3, bei welcher die transparente Substratschicht (7) ein Thermoplast oder ein Duroplast umfasst oder eine Glasschicht, die eine Dicke von kleiner oder gleich 0,5 mm aufweist, ist.

5. Fahrzeug-Verbundscheibe (1) nach einem der Ansprüche 1 bis 4, bei welcher die elektrisch beheizbare opake Schicht (11) ein elektrisch leitfähiges Polymer enthält oder daraus besteht.

6. Fahrzeug-Verbundscheibe (1) nach einem der Ansprüche 1 bis 5, bei welcher die elektrisch beheizbare opake Schicht (11) zumindest abschnittsweise durchlässig für Infrarotstrahlung mit einer Wellenlänge im Bereich zwischen 800 nm und 1100 nm ist.

7. Fahrzeug-Verbundscheibe (1) nach einem der Ansprüche 1 bis 6, bei welcher die Fahrzeug-Verbundscheibe (1) eine Windschutzscheibe ist, die entlang einer Mittellinie spiegelsymmetrisch ist, und das Einlegeelement (5) auf der Mittellinie in der Nähe der Oberkante (O) der Windschutzscheibe angeordnet ist.

8. Verfahren zur Herstellung einer Fahrzeug-Verbundscheibe (1) nach einem der Ansprüche 1 bis 7, mit den Schritten
(a) Bereitstellen einer ersten Scheibe (2), einer zweiten Scheibe (3), mindestens einer thermoplastischen Zwischenschicht (4) und eines Einlegeelements (5), mindestens umfassend eine transparente Substratschicht (7) und eine elektrisch beheizbare opake Schicht (11), die mindestens eine Aussparung (8) aufweist, wobei
i) die transparente Substratschicht (7) vollflächig direkt benachbart zur elektrisch beheizbaren opaken Schicht (11) und der mindestens einen Aussparung (8) angeordnet ist, oder
ii) die transparente Substratschicht (7) vollständig in der mindestens einen Aussparung (8) der elektrisch beheizbaren opaken Schicht (11) angeordnet ist,
(b) Anordnen der mindestens einen thermoplastischen Zwischenschicht (4) und des Einlegeelements (5) zwischen der ersten Scheibe (2) und der zweiten Scheibe (3); und
(c) Verbinden der ersten Scheibe (2) über die mindestens eine thermoplastische Zwischenschicht (4) mit der zweiten Scheibe (3) durch Lamination.

9. Verwendung einer Fahrzeug-Verbundscheibe (1) nach einem der Ansprüche 1 bis 7 als Windschutzscheibe eines Fahrzeugs, bevorzugt eines Kraftfahrzeugs.
